(19) Europäisches Patentamt / European Patent Office / Office européen des brevets

(11) **EP 3 100 591 B1**

(12) **EUROPÄISCHE PATENTSCHRIFT**

(45) Veröffentlichungstag und Bekanntmachung des Hinweises auf die Patenterteilung:
**03.05.2023 Patentblatt 2023/18**

(21) Anmeldenummer: **15712033.8**

(22) Anmeldetag: **30.01.2015**

(51) Internationale Patentklassifikation (IPC):
**H05B 45/10** *(2020.01)*

(52) Gemeinsame Patentklassifikation (CPC):
**H05B 45/14; H05B 45/10; H05B 45/382; H05B 45/385; H05B 45/39; H05B 45/56; H05B 47/18;** H05B 45/375

(86) Internationale Anmeldenummer:
**PCT/AT2015/050031**

(87) Internationale Veröffentlichungsnummer:
**WO 2015/113095 (06.08.2015 Gazette 2015/31)**

(54) **ERFASSUNG EINES LED-MODULS**

RECOGNITION OF A LED MODUL

DÉTECTION D'UN MODULE LED

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.01.2014 AT 432014 U**

(43) Veröffentlichungstag der Anmeldung:
**07.12.2016 Patentblatt 2016/49**

(73) Patentinhaber: **Tridonic GmbH & Co. KG 6851 Dornbirn (AT)**

(72) Erfinder:
• **LOCHMANN, Frank 88147 Esseratsweiler (DE)**
• **MARTE, Patrick A-6840 Götzis (AT)**

(74) Vertreter: **Rupp, Christian Mitscherlich PartmbB Patent- und Rechtsanwälte Sonnenstraße 33 80331 München (DE)**

(56) Entgegenhaltungen:

| | |
|---|---|
| WO-A1-2008/151800 | WO-A1-2012/132048 |
| WO-A1-2013/153510 | WO-A1-2013/159131 |
| WO-A1-2015/091064 | DE-A1-102009 030 106 |
| DE-A1-102012 007 451 | US-A1- 2012 019 157 |
| US-A1- 2012 033 453 | US-A1- 2012 098 463 |
| US-A1- 2012 235 598 | US-A1- 2012 248 998 |
| US-A1- 2013 020 945 | US-A1- 2013 044 520 |
| US-A1- 2014 009 084 | |

**Beschreibung**

Die vorliegende Erfindung betrifft ein Modul für den Betrieb wenigstens eines Leuchtmittels bzw. einer Leuchtmittelstrecke, vorzugsweise wenigstens einer LED, sowie einen Treiber zum Versorgen bzw. Betreiben des Moduls.

Die Druckschrift WO 2012/132048 A1 offenbart ein LED-Betriebsgerät und ein LED-Beleuchtungsgerät.

Aus der Druckschrift US 2012/0235598 A1 ist ein LED-Modul bekannt, der neben LEDs zusätzlich noch ein Identifizierungselement zum Ermitteln eines Betriebsparameters des LED-Moduls aufweist. Als Identifizierungselement kann ein Kodierwiderstand in dem LED-Modul vorgesehen sein. Der am LED-Modul angeschlossene LED-Treiber legt dabei eine Spannung über diesen Kodierwiderstand an. Der sich einstellende Stromschluss durch den Kodierwiderstand wird gemessen, um somit eine Information bzgl. des Sollstroms des zugeordneten LED-Moduls in Erfahrung zu bringen.

Bei dieser bekannten Schaltungsanordnung besteht allerdings das Problem, dass bei Vorsehen eines galvanisch getrennten LED-Treibers eine Information von der Sekundärseite der SELV-Barriere (safety extra low voltage barrier) auf die Primärseite zurückgeführt werden muss. Insbesondere ist es notwendig, den gemessenen Parameter über eine derartige SELV-Barriere zurückzuführen. Dieses Zurückführen einer Information von der Sekundärseite der SELV-Barriere auf die Primärseite verursacht einen zusätzlichen Aufwand und zusätzliche Kosten, da z.B. dann ein Optokoppler vorgesehen sein muss.

Die Erfindung setzt nunmehr an diesem Problem an.

Die Erfindung umfasst einen LED-Treiber gemäß Anspruch 1, ein Verfahren gemäß Anspruch 2, und ein System gemäß Anspruch 3.

Ferner wird ein nicht erfindungsgemäßes Verfahren zum Auslesen von Information von einem LED-Modul offenbart, aufweisend die Schritte:

- galvanisch getrenntes Übertragen einer elektrischen Leistung zu einer Schaltung auf der Sekundärseite eines Übertragers, derart, dass an der Schaltung eine definierte Spannung anliegt, wobei die Schaltung dem LED-Modul zugeordnet ist, und
- indirektes Erfassen eines elektrischen Parameters der Schaltung oder dessen zeitlicher Veränderung anhand eines Parameters, der auf der Primärseite des Übertragers erfasst wird.

Der elektrische Parameter der Schaltung kann z.B. der Strom durch die Schaltung oder der Wert des Widerstands bzw. der Impedanz der Schaltung sein. Der auf der Primärseite des Übertragers erfasste Parameter kann z.B. ein Taktungsparameter, wie die Frequenz und/oder das Tastverhältnis, des getakteten Übertragers.

Bei dem Verfahren kann die sekundärseitige, dem LED-Modul zugeordnete Schaltung bei Anliegen der definierten Spannung wenigstens einen, vorzugsweise mehrere Lastwechsel ausführen.

Der elektrische Parameter der Schaltung kann auf der Sekundärseite des Übertragers eine Information von einem mit dem LED-Modul funktional verbundenen Sensor widergeben, bspw. von einem Tageslicht-, Rauch- oder Bewegungssensor.

An die sekundärseitige Schaltung können zwei oder mehr unterschiedliche diskrete Spannungspegel anlegbar sein. Die sekundärseitige Schaltung kann sich bei unterschiedlichen Spannungspegeln elektrisch unterschiedlich verhalten, so dass unterschiedliche Informationen an der Primärseite erfassbar sind.

Die Schaltung kann eine intelligente Schaltung, die definierte Lastwechsel erzeugt, und/oder einen Ohm'schen Widerstand aufweisen.

Die Spannung an der Schaltung kann indirekt, bspw. mittels einer mit der Sekundärseite des Übertragers gekoppelten Messwicklung, an der Primärseite des Übertragers erfasst werden.

Ferner wird ein Verfahren zum Auslesen von Information von einem LED-Modul offenbart, aufweisend die Schritte:

- galvanisch getrenntes Übertragen eines elektrischen Parameters einer Schaltung durch eine Auswerteeinheit auf der Sekundärseite eines Übertragers, wobei die Schaltung dem LED-Modul zugeordnet ist, und
- vorzugsweise ein nicht erfindungsgemäßes indirektes Erfassen eines elektrischen Parameters der Schaltung oder dessen zeitlicher Veränderung anhand eines Parameters, der auf der Primärseite des Übertragers erfasst wird, wobei vorzugsweise der elektrische Parameter der Schaltung der Strom durch die Schaltung oder der Wert des Widerstands bzw. der Impedanz der Schaltung ist.

Ferner wird ein nicht erfindungsgemäßes Verfahren zum Auslesen des Werts eines Kodierwiderstands eines LED-Moduls offenbart, aufweisend die Schritte:

- galvanisch getrenntes Übertragen einer elektrischen Leistung zu dem Kodierwiderstand, der auf der Sekundärseite eines Übertragers angeordnet ist, derart, dass an dem Kodierwiderstand eine definierte Spannung anliegt, und
- indirektes Erfassen des Stroms durch den Kodierwiderstand oder des Widerstandswerts des Kodierwiderstands anhand eines Parameters, der auf der Primärseite des Sekundärseite des Übertragers erfasst wird.

Der Übertrager kann ein primärseitig aktiv getakteter Übertrager sein, wie bspw. ein Flyback-Konverter.

Der Strom durch den Kodierwiderstand oder der Widerstandswert des Kodierwiderstands kann anhand eines Taktungsparameters, bspw. die Frequenz und/oder das Tastverhältnis, des primärseitig getakteten Übertragers erfasst werden. Dabei handelt es sich um einen Taktungsparameter, der sich zur Erzielung der definierten Spannung an dem Kodierwiderstand einstellt.

Ferner wird ein nicht erfindungsgemäßer Auslese-Konverter offenbart, der zum Auslesen von Information von einem anschließbaren und versorgbaren LED-Modul ausgelegt ist, aufweisend:

- einen Übertrager zur galvanisch getrennten Übertragen eines elektrischen Parameters zu einer dem LED-Modul zugeordneten Schaltung, die ausgehend von der Sekundärseite des Übertragers versorgbar ist, derart, dass an der Schaltung eine definierte Spannung anliegt, und
- eine auf der Primärseite des Übertragers angeordnete Erfassungsschaltung zum indirekten Erfassen eines elektrischen Parameters der Schaltung oder dessen zeitlicher Veränderung.

Der Spannungsabfall über den Kodierwiderstand kann indirekt, bspw. mittels einer mit der Sekundärseite des Übertragers gekoppelten Messwicklung, an der Primärseite des Übertragers erfasst werden.

Es wird weiterhin ein nicht erfindungsgemäßer LED-Konverter offenbart, der zum Auslesen von Information von einem anschließbaren und versorgbaren LED-Modul ausgelegt ist, aufweisend:

- einen primärseitig gespeisten Übertrager zur galvanisch getrennten Übertragen einer elektrischen Leistung zu einer dem LED-Modul zugeordneten Schaltung, die ausgehend von der Sekundärseite des Übertragers versorgbar ist, derart, dass an der Schaltung eine definierte Spannung anliegt, und
- eine auf der Primärseite des Übertragers angeordnete Erfassungsschaltung zum indirekten Erfassen eines elektrischen Parameters der Schaltung oder dessen zeitlicher Veränderung.

Die Erfassungsschaltung kann dazu ausgelegt sein, einen, vorzugsweise mehrere Lastwechsel der sekundärseitigen, dem LED-Modul zugeordneten Schaltung zu erfassen.

Der elektrische Parameter der Schaltung auf der Sekundärseite des Übertragers kann eine Information von einem mit dem LED-Modul funktional verbundenen Sensor widergeben, bspw. von einem Tageslicht-, Rauch- oder Bewegungssensor.

Der Konverter kann dazu ausgelegt sein, an die sekundärseitige Schaltung zwei oder mehr unterschiedliche diskrete Spannungspegel anzulegen.

Der Spannungsabfall über den Kodierwiderstand kann indirekt, bspw. mittels einer mit der Sekundärseite des Übertragers gekoppelten Messwicklung, an der Primärseite des Übertragers erfasst werden.

Es wird weiterhin ein nicht erfindungsgemäßes Verfahren zum Auslesen des Werts eines Kodierwiderstands eines LED-Moduls offenbart, aufweisend die Schritte:

- galvanisch getrenntes Übertragen einer elektrischen Leistung zu dem Kodierwiderstand, der auf der Sekundärseite eines Übertragers angeordnet ist, derart, dass an dem Kodierwiderstand eine definierte Spannung anliegt, und
- indirektes Erfassen des Stroms durch den Kodierwiderstand oder des Widerstandswerts des Kodierwiderstands anhand eines Parameters, der auf der Primärseite des Übertragers erfasst wird.

Es wird ein nicht erfindungsgemäßer LED-Konverter offenbart, der zum elektrischen Versorgen und Auslesen des Werts eines Kodierwiderstands eines LED-Moduls ausgelegt ist, aufweisend:

- einen primärseitig gespeisten Übertrager zur galvanisch getrennten Übertragung einer elektrischen Leistung zu einem dem LED-Modul zugeordneten Kodierwiderstand, der ausgehend von der Sekundärseite des Übertragers versorgbar ist, derart, dass an dem Kodierwiderstand eine definierte Spannung anliegt, und
- eine auf der Primärseite des Übertragers angeordnete Erfassungsschaltung zum indirekten Erfassen eines elektrischen Parameters des Kodierwiderstands oder dessen zeitlicher Veränderung.

Der Übertrager kann ein von einer Steuerschaltung mittels wenigstens eines Schalters primärseitig aktiv getakteter Übertrager sein, wie bspw. ein Flyback-Konverter.

Der Spannungsabfall über den Kodierwiderstand kann indirekt, bspw. mittels einer mit der Sekundärseite des Übertragers gekoppelten Messwicklung, an der Primärseite des Übertragers erfasst werden.

Es wird ein LED-Treiber offenbart aufweisend einen oben beschriebenen LED-Konverter zum Auslesen von Information von einem anschließbaren LED-Modul, und einen LED-Konverter zur Versorgung der LEDs des anschließbaren LED-Modul.

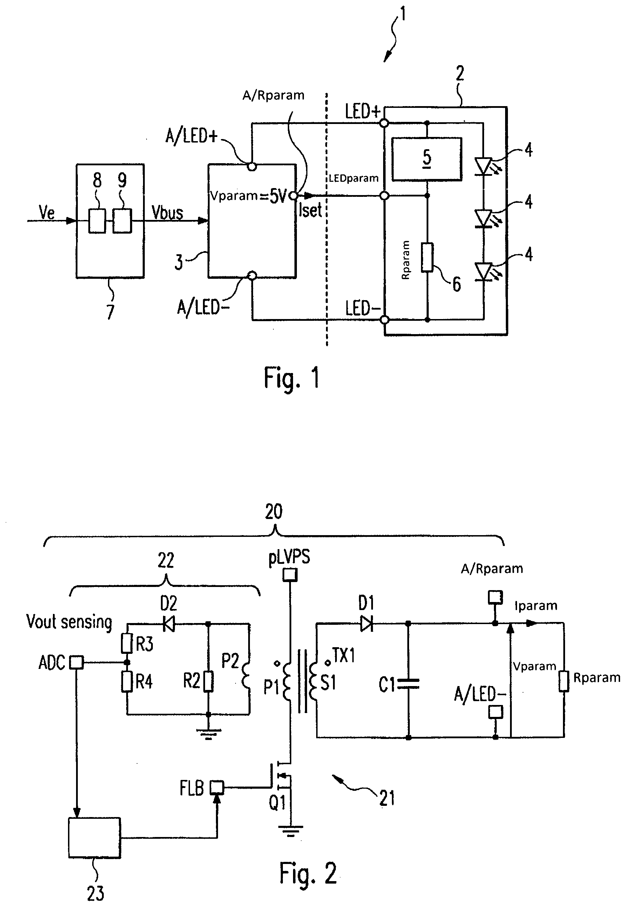

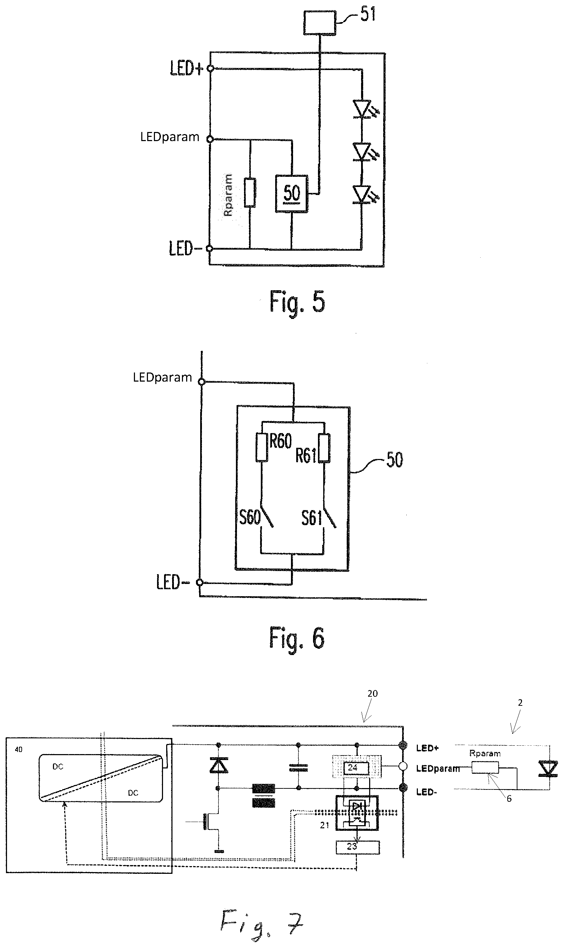

Weitere Eigenschaften, Vorteile und Merkmale werden dem Fachmann nunmehr anhand der folgenden ausführlichen Beschreibung von Ausführungsbeispielen und unter Bezugnahme auf die Figuren der begleitenden Zeichnungen vermittelt. Hierbei zeigt Figur 7 ein erfindungsgemäßes Ausführungsbeispiel, wobei die in den Figuren 1 bis 6 gezeigten Beispiele zum Verständnis des in Figur 7 gezeigten erfindungsgemäßen Ausführungsbeispiels dienen.

Fig. 1     zeigt eine schematische Darstellung eines Aus-

führungsbeispiels eines LED-Beleuchtungs-systems mit LED-Treiber und LED-Modul,

Fig. 2 zeigt eine schematische Darstellung eines Ausführungsbeispiels des schaltungstechnischen Aufbaus eines LED-Konverters des LED-Treibers zum Auslesen von Information von einem anschließbaren LED-Modul,

Fig. 3 zeigt einen Zusammenhang zwischen dem Strom durch eine Erfassungsschaltung und dem Widerstandswert der Erfassungsschaltung,

Fig. 4 zeigt eine schematische Darstellung eines Ausführungsbeispiels des schaltungstechnischen Aufbaus eines LED-Konverters des LED-Treibers zur Versorgung von einem anschließbaren LED-Modul,

Fig. 5 zeigt ein LED-Modul mit einer intelligenten Schaltung zum Ausführen von Lastwechseln, und

Fig. 6 zeigt ein Ausführungsbeispiel für eine intelligente Schaltung zum Ausführen von Lastwechseln,

Fig. 7 zeigt eine schematische Darstellung eines Ausführungsbeispiels des schaltungstechnischen Aufbaus eines erfindungsgemäßen Auslese-Konverters des LED-Treibers zum Auslesen von Information von einem anschließbaren LED-Modul.

In Fig. 1 ist schematisch ein LED-Beleuchtungssystem 1 dargestellt. Das LED-Beleuchtungssystem 1 umfasst ein LED-Modul 2 aufweisend LEDs sowie einen LED-Treiber 3 zum betreiben des LED-Moduls 2.

Wie in Fig. 1 ersichtlich, weist das LED-Beleuchtungssystem 1 zudem eine Versorgungseinheit 7 auf, die vorzugsweise mit einer Eingangsspannung Ve, insbesondere Netz-Wechselspannung, versorgt ist. Diese Eingangsspannung Ve wird einer Filter- und Gleichrichtereinheit 8 zugeführt, die vorzugsweise die Eingangsspannung Ve mit Hilfe von z.B. mindestens einem Kondensator filtert. Die Filter- und Gleichrichtereinheit 8 umfasst einen Gleichrichter z.B. in Form eines Brückengleichrichters zum Ausführen einer Gleichrichtung der vorzugsweise gefilterten Eingangsspannung Ve.

Die gleichgerichtete Eingangsspannung Ve wird anschließend einer aktiv getakteten Leistungsfaktorkorrektur- oder PFC (Power Factor Correction)-Schaltung 9 der Versorgungseinheit 7 zugeführt.

Die Ausgangsspannung der Versorgungseinheit 7 ist eine DC-Spannung, die auch als Busspannung Vbus gekennzeichnet wird. Eine solche Busspannung Vbus weist bekanntermaßen eine im Wesentlichen konstante Spannung mit einer im Vergleich zur Amplitude der Busspannung Vbus kleiner Welligkeit bzw. Ripple. Die Versorgungseinheit 7 kann statt der PFC-Schaltung 9 einen anderen Konverter zum Erzeugen einer Busspannung Vbus umfassen.

Nach der PFC-Schaltung 9 kann die Versorgungseinheit 7 optional noch eine weitere Isolierungseinheit (nicht gezeigt) aufweisen, die im Wesentlichen die Funktion einer Isolierung bzw. galvanischen Trennung aufweist und hierzu als galvanisches Trennelement z.B. einen Transformator umfasst.

Diese Isolierungseinheit weist vorzugsweise eine Wandlertopologie mit galvanischer Trennung gemäß z.B. einem Halbbrückenflusswandler oder einem Resonanzwandler.

Die Busspannung Vbus, die alternativ auch eine konstante Batteriespannung sein kann, versorgt den LED-Treiber 3, der über drei Anschlüsse bzw. Pins A/LED+, A/Rparam. und A/LED- mit dem LED-Modul 2 verbunden ist. Das LED-Modul 2 umfasst drei Anschlüsse LED+, Led-param. und LED-, die jeweils an den drei Anschlüssen des LED-Treibers 3 angeschlossen sind. Über die Verbindung zwischen den Anschlüssen A/LED-, LED- wird eine gemeinsame Masse für den LED-Treiber 3 und das LED-Modul 2 bereitgestellt. Die Anschlüsse A/LED+, LED+ sind über eine Leitung verbunden, so dass LEDs 4 des LED-Moduls 2 ausgehend vom LED-Treiber 3 mit Strom betrieben werden können.

Die LEDs 4 sind dabei zwischen den Anschlüssen LED+ und LED- vorzugsweise als LED-Strecke angeordnet. Die LEDs 4 können zwischen den Anschlüssen LED+ und LED- in Serie oder in Parallel geschaltet sein. Alternativ ist auch eine Konfiguration mit mehreren in Parallel geschalteten Serienschaltungen von einer oder mehreren LEDs denkbar. Alternativ zum Ausführungsbeispiel der Fig. 2 kann das LED-Modul 2 auch nur eine LED aufweisen. Die LEDs 4 können dabei alle vom selben Typen sein und insbesondere dieselbe Farbe emittieren, wie z.B. weiß. Auch können die LEDs des LED-Moduls verschiedene Farben, die zusammen z.B. ein weißes Mischlicht ergeben, ausstrahlen.

Das LED-Modul 2 umfasst weiterhin eine Kodierschaltung 6, die zwischen den Anschlüssen Led-param. und LED- vorgesehen ist (in vorliegender Anmeldung wird für die Kodierschaltung 6 anstelle des Begriffs *"Kodierschaltung"* auch der Begriff *"Schaltung"* verwendet). Im Ausführungsbeispiel der Fig. 1 besteht die Kodierschaltung 6 aus einem Kodierwiderstand Rparam.. Die Kodierschaltung 6 kann eine passive Schaltung sein.

Wie aus Fig. 1 ersichtlich, sind die LED-Strecke und die Kodierschaltung 6 jeweils mit Masse LED- geschaltet und zueinander parallel geschaltet. In Fig. 1 ist gezeigt, wie an der Kodierschaltung 6 zwischen den Anschlüssen A/Rparam. und A/LED- eine Spannung von z.B. 5 Volt angelegt wird. Der Ausgangsstrom am Anschluss A/Rparam., der auch vorzugsweise dem Strom durch die Kodierschaltung 6 entspricht, ist mit Ilparam. gekennzeichnet.

Erfindungsgemäß kodiert die Kodierschaltung 6 eine Information, die dem LED-Treiber 3 übermittelbar ist. Diese Information betrifft vorzugsweise das LED-Modul 2 und dient zur Kennzeichnung des LED-Moduls 2. Durch ein Ablesen dieser Information ist der LED-Treiber 3 dann in der Lage, das angeschlossene LED-Modul 2 zu identifizieren. Z.B. kann die in der Kodierschaltung 6 kodierte Information die Bezeichnung des LED-Moduls 2 oder die von diesem erzeugte Farbe definieren. Die über die Kodierschaltung 6 übermittelte Information kann vorzugsweise einen Betriebsparameter für das LED-Modul 2 sein, wie z.B. ein Sollstrom bzw. Nennstrom oder eine Sollleistung bzw. Nennleistung für das LED-Modul 2. Die Erfindung geht also insbesondere davon aus, dass eine Kodierschaltung 6 bzw. ein Kodierwiderstand Rparam. auf dem LED-Modul vorgesehen ist, dessen Widerstandswert den Sollwert des Stroms für das zugeordnete LED-Modul kodiert. Der LED-Treiber empfängt diese Information und regelt entsprechend den Strom oder die Leistung für das LED-Modul 2.

In Fig. 1 ist die Schaltung einer Kompensationseinheit 5 innerhalb des LED-Moduls 2 gezeigt, z.B. zwischen den zwei Anschlüssen LED+ und Led-param.. Diese Kompensationseinheit 5 ist dazu geeignet, den Wert des durch die Kodierschaltung 6 kodierten Betriebsparameters zu beeinflussen bzw. verändern. Z.B. kann die Kompensationseinheit 5 abhängig von der Umgebungstemperatur des LED-Moduls den kodierten Sollstrom derart beeinflussen, dass bei einer zu hohen Umgebungstemperatur der von dem LED-Treiber 3 abgelesene Sollstrom für die LEDs gesenkt wird. Mit dieser Maßnahme, die im Englischen "thermal derating" genannt ist, kann einer vorzeitigen Alterung der LEDs, die bei zu hohen Umgebungstemperaturen eintritt, entgegengetreten werden. Dadurch kann auch eine die von den LEDs abgegebene Wärme reduziert werden. Diese Kompensationseinheit 5 ist optional und kann auch weggelassen werden, so dass zwischen den Anschlüssen LED+ und Led-param. keine derartige Kompensationseinheit 5 vorgesehen ist.

Fig. 2 zeigt eine schematische Darstellung eines Ausführungsbeispiels des schaltungstechnischen Aufbaus des LED-Treibers 3.

Fig. 2 zeigt insbesondere einen Auslese-Konverter 20, der im LED-Treiber 3 angeordnet ist und für das Auslesen von Information aus dem LED-Modul 2 bzw. aus der Kodierschaltung 6 zuständig ist.

Wie bereits im Zusammenhang mit Fig. 1 erläutert, wird ein vorgegebener definierter Spannungsabfall Vparam. über die Kodierschaltung 6 bzw. über den Kodierwiderstand Rparam. erzeugt. Es wird davon ausgegangen, dass sich der dann einstellende Strom Iparam. die Kodiergröße darstellt. Der Strom Iparam. ist der Strom am Ausgang A/Rparam. bzw. der Strom durch den Kodierwiderstand Rparam.. Alternativ kann auch der Wert des elektrischen Widerstands des Kodierwiderstands Rparam. die Kodiergröße darstellen.

Im Ausführungsbeispiel der Fig. 2 wird die Spannung Vparam. über den Kodierwiderstand Rparam. ausgehend von einem primärseitig getakteten Flyback-Konverter 21, auch Sperrwandler genannt, erzeugt. Der Flyback-Konverter ist hier beispielhaft für einen Auslese-Konverter genannt. Die Spannung Vparam. kann alternativ von einem anderen getakteten potentialgetrennten Spannungsversorgung erzeugt werden.

Der Flyback-Konverter 21 umfasst eine Primärwicklung P1, die mit einer Sekundärwicklung S1 gekoppelt ist. Die Primärwicklung P1 ist in Serie mit einem Schalter Q1, der z.B. als Transistor bzw. als MOSFET ausgestaltet ist, geschaltet. Der Schalter Q1 ist mit einer primärseitigen Masse verbunden. An der Serienschaltung bestehend aus der Primärwicklung P1 und dem Schalter Q1 liegt eine Spannung pLVPS an. Diese Spannung pLVPS ist vorzugsweise eine DC-Spannung in Form z.B. einer Kleinspannung bwz. einer Niederspannung, die ausgehend von der in Fig. 1 dargestellten Busspannung Vbus erzeugt werden kann.

Die Sekundärwicklung S1 ist einerseits mit dem Anschluss A/LED- verbunden, der eine sekundärseitige Masse definiert. Andererseits ist die Sekundärwicklung S1 über eine Diode D1 mit dem Anschluss A/Rparam. verbunden. Der Flyback-Konverter umfasst sekundärseitig noch einen Kondensator C1 den Anschlüssen A/Rparam. und A/LED-. Die Funktionsweise des Flyback-Konverters ist an sich bekannt. Der Schalter Q1 des Flyback-Konverters wird mittels eines Steuersignals FLB alternierend und hochfrequent ein- und ausgeschaltet. Auf eine Leitphase mit geschlossenem Schalter Q1 folgt eine Sperrphase mit geöffnetem Schalter Q1 usw.

Der Widerstand Rparam. ist an der Sekundärseite dieser getakteten potentialgetrennten Spannungsversorgung in Form eines Flyback-Konverters angeordnet. Mittels einer weiteren Wicklung P2 wird nunmehr ein Signal an einem Anschluss oder Pin ADC erzeugt, das im Sinne einer gespiegelten Spannung die Spannung Vparam. über den Kodierwiderstand Rparam. wiedergibt. Diese Wicklung P2 ist primärseitig angeordnet. Parallel zu der weiteren Wicklung P2 ist ein Widerstand R2 angeordnet, sowie eine Reihenschaltung umfassend eine Diode und zwei Widerstände R3, R4 eines Spannungsteilers. Die Spannung am Anschluss ADC gibt über den Spannungsteiler R3, R4 und über das Verhältnis der Windungszahlen von der Sekundärwicklung S1 und der weiteren Primärwicklung P2 die Spannung Vparam. am Kodierwiderstand Rparam. indirekt wieder.

Die Spannung Vparam. an dem Kodierwiderstand Rparam. wird auf einen definierten Spannungswert von z.B. 5 Volt von einer Steuereinheit 23 geregelt. Die Steuereinheit 23 erhält als Rückführ-Information die Spannung am Anschluss ADC, die die Spannung Vparam. wiedergibt. Durch Änderung der Taktung des Schalters Q1 kann die Ausgangsspannung Vparam. verändert werden. Beispielsweise wird die Spannung Vparam. durch Veränderung des Tastverhältnisses tv des Steuersignals FLB für den Schalter Q1 oder durch Veränderung der Frequenz f des Steuersignals FLB angepasst.

Für die Veränderung des Tastverhältnisses tv bzw. der Frequenz f ist die Steuereinheit 23 zuständig.

Die Spannung Vparam. wird auf den definierten Wert konstant gehalten. Hierzu wird die Frequenz f bzw. das Tastverhältnis tv des Schalters Q1 des Flyback-Konverters solange verändert bis das Signal ADC anzeigt, dass die Spannung über den Kodierwiderstand Rparam. die vorgegebene Spannung von beispielsweise 5 Volt erreicht und beibehält.

Als Größe für den Strom durch den Widerstand Rparam. bei dem vorgegebenen Spannungsabfall von beispielsweise 5 Volt, wird nunmehr die zum Erreichen der vorgegebenen Spannung über den Widerstand Rparam. notwendige Frequenz f der Taktung des Flyback-Schalters Q1 verwendet. Mit anderen Worten, aus der für den erforderlichen Spannungsabfall Vparam. notwendigen Frequenz f wird auf den erforderlichen Sollstrom für das LED-Modul 2 geschlossen, dass dem Kodierwiderstand Rparam. zugeordnet ist. Alternativ zur Frequenz f kann auch das Tastverhältnis tv der Taktung des Schalters Q1 bzw. das Tastverhältnis tv des Steuersignals FLB verwendet werden.

Es besteht also die Möglichkeit, eine Information von der Sekundärseite der SELV-Barriere bzw. der galvanischen Trennung primärseitig in Erfahrung zu bringen, ohne dabei auf einen Optokoppler oder ähnliches Bauelement zur Überquerung der SELV-Barriere angewiesen zu sein.

Sobald die Spannung Vparam. an der Kodierschaltung 6 auf die definierte Spannung von z.B. 5 Volt durch entsprechende Steuerung des Schalters Q1 des Flyback-Konverters eingestellt bzw. geregelt wurde, hat sich auch die Frequenz f und/oder das Tastverhältnis des Steuersignals FLB für den Schalter Q1 auf einen bestimmten Wert stabilisiert. Dieser Wert wird herangezogen, um auf die Kodiergröße zurückgreifen zu können, wobei wie gesagt die Kodiergröße entweder der sich bei der definierten Spannung einstellende Strom Iparam. oder der Wert des Kodierwiderstands Rparam. ist.

Der Zusammenhang zwischen dem Taktungsparameter - Frequenz f und/oder das Tastverhältnis tv des Steuersignals FLB - und der Kodiergröße kann z.B. mittels einer im LED-Treiber 3 oder in der Steuereinheit 23 gespeicherte Look-up Tabelle oder Nachschlagtabelle hergestellt werden.

Gemäß einem Ausführungsbeispiel kann, wie bereits erwähnt, die definierte Spannung für die Spannung Vparam. über der Kodierschaltung 5 Volt betragen.

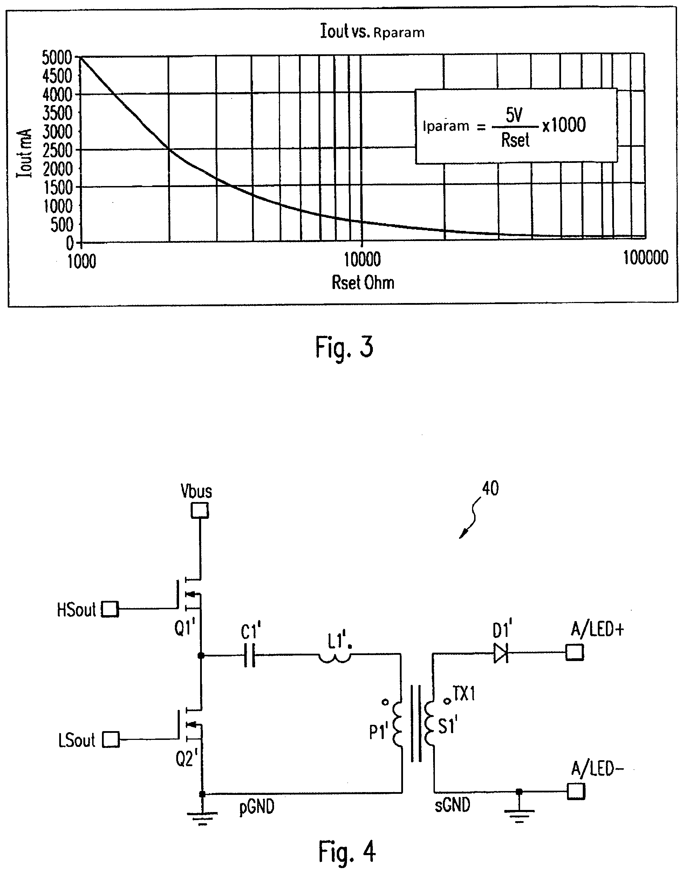

Der Bereich für den Wert des Kodierwiderstands Rparam. geht z.B. von 1 kΩ bis 100 kΩ. Dies ergibt ein Bereich für den Strom Iparam. von 5mA bis 50μA. Der Zusammenhang zwischen dem Strom Iparam. und dem Wert des Kodierwiderstands ist in Fig. 3 dargestellt. Beispielsweise ist der Zusammenhang zwischen dem Strom Iparam. und dem Wert des Kodierwiderstands eine umgekehrte Proportionalität, beispielsweise wie in Fig. 3 dargestellt gemäß der Formel:

$$Iparam. = 1000 * 5V / Rparam. .$$

In einer alternativen Variante kann der Strom Iparam. in Abhängigkeit einer umgekehrten Exponentialfunktion des Wertes des Kodierwiderstands kodiert sein. Beispielsweise kann der Strom Iparam. in Abhängigkeit des natürlichen Logarithmus des Wertes des Kodierwiderstands multipliziert mit einem vorgegebenen Faktor Fc stehen:

$$Iparam. = Fc * \ln(Rparam.) .$$

Der vorgegebene Faktor Fc kann abhängig von der Spannung Vparam. über der Kodierschaltung gewählt werden. Der vorgegebene Faktor Fc kann einen negativen Wert aufweisen.

Vorzugsweise wird der Widerstand Rparam. anhand der Frequenz f des Steuersignals FLB ermittelt. Die folgende Tabelle ist ein Beispiel für eine entsprechende Look-up Tabelle:

| Rparam. | f_FLB |
|---|---|
| 100 kΩ | 34,97 kHz |
| 90,5 kΩ | 38,17 kHz |
| 81,9 kΩ | 42,37 kHz |
| ... | ... |
| 1,4 kΩ | 68,92 kHz |
| 1,2 kΩ | 78,37 kHz |
| 1,1 kΩ | 85,76 kHz |
| 1 kΩ | 95,06 kHz |

Darüber hinaus lässt sich die durch den Auslese-Konverter 20 gebildete Versorgungsschaltung Vparam. auch für anderweitige Zwecke im LED-Treiber 3 als Niederspannungsversorgung verwenden.

Die optionale Kompensationseinheit 5 der Fig. 1 kann z.B. ein Thermistor sein, der dessen Widerstandswert sich mit der Temperatur ändert. Bei einem Kaltleiter oder PTC (Positive Temperature Coefficient)-Widerstand vergrößert sich der elektrische Widerstand bei steigender Temperatur, und umgekehrt bei einem Thermistor in Form eines Heißleiters oder NTC (Negative Temperature Coefficient)-Widerstands. Die Kompensationseinheit 5 sorgt vorzugsweise dafür, dass sich der Strom durch die Kodierschaltung 6 ändert. Somit kann die Kompensationseinheit 5 z.B. bei hohen Umgebungstemperaturen die Erfassung des Widerstandswert Rparam. derart manipulieren, dass die Erfassungsschaltung 22 nicht etwa den Widerstandswert der angeschlossenen Kodierschaltung 6 erfasst, sondern einen veränderten Widerstandswert, der einem niedrigeren Sollstrom entspricht.

Fig. 4 zeigt eine schematische Darstellung eines Ausführungsbeispiels eines LED-Konverters 40 zur Versorgung von einem anschließbaren LED-Modul 2. Der LED-Konverter 40 ist Teil des LED-Treibers 3.

Der LED-Konverter 40 umfasst einen Schaltregler, z.B. einen Halbbrücken-Wandler aufweisend einen potentialniedrigeren Schalter Q2' und einen potentialhöheren Schalter Q1'. Der Halbbrücken-Wandler wird von der in Fig. 1 gezeigte Busspannung Vbus versorgt. Die Schalter der Halbbrücke können als Transistoren, z.B. FET oder MOSFET, ausgestaltet sein.

Am Mittelpunkt der Halbbrücke, d.h. zwischen beiden Schaltern Q2',Q1', ist ein Resonanzwandler in Form eines LLC Konverters angeschlossen. Der LLC Konverter umfasst eine Reihenschaltung aus einer Kapazität C1', einer Induktivität L1' und einer Primärwicklung P1' einer galvanischen Sperre bzw. eines Transformators. Die Kapazität C1' und die Induktivität L1' bilden einen LC Resonanzkreis.

Auf der Sekundärseite ist eine Sekundärwicklung S1' vorgesehen, die mit der Primärwicklung P1' gekoppelt ist und die an eine Diode D1' angeschlossen ist. Die Sekundärwicklung S1' ist auch mit einer sekundärseitigen Masse sGND verbunden. Die Kathode der Dioden D1' ist mit dem in Fig. 1 gezeigten Anschluss A/LED+ verbunden. Der Anschluss A/LED- ist mit der sekundärseitigen Masse sGND verbunden. Das LED-Modul 2 ist an den Anschlüssen A/LED+ und A/LED- anschließbar und versorgbar.

Durch entsprechende Steuerung der Schalter Q1', Q2' z.B. durch die Steuereinheit 23 des LED-Treibers 3 kann bekanntermaßen ein gewünschter Strom für das LED-Modul 2 erzeugt werden. Dieser gewünschte Strom ist vorzugsweise der Strom, der durch die Kodierschaltung 6 kodiert ist. Hierzu ist z.B. eine Look-Up Tabelle im LED-Treiber vorgesehen, die für eine bestimmte Kodiergröße - z.B. einen bestimmten Wert des Widerstands Rparam. - einen entsprechenden Strom für das LED-Modul festlegt.

Zur Regelung des Stroms für das LED-Modul 2 kann vorzugsweise der Strom durch das LED-Modul zur Steuereinheit 23 rückgeführt werden. Andere bekannte Verfahren zur Regelung des Stroms sind einsetzbar.

Statt des in Fig. 4 gezeigten LED-Konverters 40 mit LLC-Konverter können die LEDs des LED-Moduls 2 mit anderen an sich bekannten Konvertern betrieben und mit Strom versorgt werden. Denkbar ist z.B. der Einsatz eines Flyback-Konverters, oder eines Buck-Konverters. Da ein Buck-Konverter keine galvanische Trennung aufweist, ist vorzugsweise bei Benutzung eines Buck-Konverters die in Zusammenhang mit Fig. 1 erwähnte Isolierungseinheit vorgesehen.

Der Auslese-Konverter 20 zum Auslesen der Information und der LED-Konverter 40 zum Versorgen der LEDs werden unabhängig voneinander betrieben. Dies ist insofern vorteilhaft, da das Auslesen der Information keinen Einfluss auf die Versorgung der LEDs hat, und umgekehrt.

Wie in Fig. 5 dargestellt, kann auch eine digitale Kodierung von Kennwerten des LED-Moduls dadurch erfolgen, dass anstelle oder zusätzlich zum Kodierwiderstand Rparam. eine intelligente Schaltung 50 sekundärseitig vorgesehen ist. Die intelligente Schaltung 50 ist vorzugsweise zwischen den Anschlüssen Led-param. und LEDangeschlossen.

Diese intelligente Schaltung 50 kann beispielsweise durch Anlegen einer vordefinierten Spannung von beispielsweise Vparam. = 7 Volt DC in einen Informationsauslesemodus versetzt werden. In diesem Informationsauslesemodus kodiert die intelligente Schaltung 50 Information beispielsweise dadurch, dass sie definierte Lastwechsel erzeugt, wobei dann sich diese Lastwechsel an dem Pin ADC wiederspiegeln und von einer dort angeschlossenen intelligenten Schaltung, wie z.B. von der Steuereinheit 23, gemäß einem vordefinierten Protokoll als vielfache Informationen interpretieren lassen, beispielsweise im Sinne eines Kodierwiderstands für den Sollstrom des LED-Moduls.

Ist die intelligente Schaltung 50 dazu ausgebildet, zwischen zwei Lastzuständen zu wechseln, so kann eine binäre Kodierung vorgenommen werden. Diese binäre Kodierung wird von der Steuereinheit wiederum dekodiert.

Darüber hinaus kann je nach vereinbartem Protokoll diese digitale Information auch Sensorinformation, wie beispielsweise Temperatur, Rauchmelder, Bewegungsmelder, Tageslichtsensor, etc. darstellen. In Fig. 5 ist z.B. ein Sensor 51 vorgesehen, der gemessene Werte an die intelligente Schaltung 50 weiterleitet, welche wiederum gemäß der digitalen Kodierung mittels Lastsprüngen die gemessene Werte oder eine davon abgeleitete Information an die Primärseite des Auslese-Konverters 20 bzw. an die Steuereinheit 23 übermittelt.

Beispielsweise kann die Steuereinheit 23 dazu ausgelegt sein, zu erkennen, ob das LED-Modul für die Übertragung einer digitalen oder analogen Information ausgelegt ist. Beispielsweise kann der LED-Treiber 3 beim Start mittels des Auslese-Konverters 20 eine Spannung am Ausgang ausgeben.

Wenn das LED-Modul dazu ausgelegt ist, eine digitale Information auszugeben, dann kann es innerhalb einer vorgegebenen Rückmeldezeit einen definierten Lastwechsel als gepulstes Signal ausgeben und damit den Auslese-Konverter 20 belasten. Die Steuereinheit 23 kann die Belastung innerhalb der vorgegebenen Rückmeldezeit überwachen. Wenn die Steuereinheit 23 innerhalb der vorgegebenen Rückmeldezeit eine wiederholte Laständerung im Sinne eines gepulsten Signal erkennt, kann die Steuereinheit 23 somit erkennen, dass das LED-Modul für die Übertragung einer digitalen Information ausgelegt ist und den weiteren Betrieb des Auslese-Konverters 20 daran anpassen und die Übertragung von digitalen Informationen erfassen.

Zusätzlich oder alternativ zu der Übertragung einer digital kodierten Information kann auch ein gepulstes Signal durch das LED-Modul ausgesendet werden, wobei beispielsweise über die Frequenz oder das Einschaltverhältnis des gepulsten Signals eine Information kodiert übertragen werden kann.

Es kann auch ein bidirektionaler Austausch von Informationen zwischen den LED-Modul und dem LED-Konverter 40 erfolgen. Beispielsweise kann der Auslese-Konverter 20 auch derart betrieben werden, dass er durch wiederholtes Ein- und Ausschalten der Taktung niederfrequent die Ausgangsspannung zwischen zwei Werten wechselt. Dabei kann der Schalter des Auslese-Konverters 20, beispielsweise der Schalter Q1, hochfrequent zur Übertragung einer Energie und zur Erzeugung einer Spannung Vparam. getaktet. Diese hochfrequente Taktung kann in niederfrequenten Pulspaketen unterbrochen werden, so dass sich beispielsweise eine niederfrequente Ausgabe von Paketen der Spannung Vparam. auf den Nominalwert sowie einen abgesenkten Wert ergeben kann, wobei der abgesenkte Wert auch Null betragen kann. Diese Pulspakete kann das LED-Modul als übertragene Information wie beispielsweise als Abfrage eines Parameters erkennen. Als Antwort auf eine derartige Abfrage eines Parameters kann das LED-Modul beispielsweise in der bereits erläuterten Weise nach vereinbartem Protokoll eine digitale Information wie beispielsweise einen Betriebsparameter, eine Alterungsinformation oder auch Sensorinformation übertragen.

Im Falle einer bidirektionaler Kommunikation zwischen LED-Modul und LED-Treiber kann der LED-Treiber auch Helligkeitsbefehle oder andere Steuerinformationen an das LED-Modul übermitteln.

Fig. 6 zeigt ein Ausführungsbeispiel für eine intelligente Schaltung 50. Zwischen den Anschlüssen Ledparam. und LED- des LED-Moduls ist in diesem Ausführungsbeispiel nur eine intelligente Schaltung 50 geschaltet. Alternativ kann auch parallel zur intelligenten Schaltung 50 ein Kodierwiderstand Rparam. vorgesehen sein.

Die intelligente Schaltung 50 umfasst eine erste Reihenschaltung bestehend aus einem ersten Widerstand R60 und einem ersten Schalter S60, und eine parallel dazu geschaltete zweite Reihenschaltung bestehend aus einem zweiten Widerstand R61 und einem zweiten Schalter S61. Die Widerstände R60, R61 haben unterschiedliche Widerstandswerte. Die intelligente Schaltung 50 umfasst noch eine Logik (nicht gezeigt), die dazu ausgelegt ist, entweder den ersten Schalter S60 ein- und den zweiten Schalter S61 auszuschalten, oder umgekehrt den ersten Schalter S60 aus- und den zweiten Schalter S61 einzuschalten. Somit kann die intelligente Schaltung 50 zwei unterschiedliche Widerstandswerte aufweisen, und somit Lastsprünge und eine binäre digitale Kodierung ausführen.

Alternativ oder zusätzlich kann auch ein Auslesen des LED-Moduls 2 durch den Auslese-Konverter 20 zeitlich begrenzt erfolgen, indem die intelligente Schaltung 50 nur während einer Startphase aufgrund einer vorgegebenen Zeitspanne aktiv ist, sobald eine Versorgungsspannung an das LED-Modul 2 angelegt wird. Diese Versorgungsspannung kann in diesem Fall auch der nominellen Ausgangsspannung des LED-Treibers 3 für den Normalbetrieb entsprechen. Nach dem Anlegen der Versorgungsspannung wird die intelligente Schaltung 50 auf dem LED-Modul 2 aktiviert und stellt eine Last für den Auslese-Konverter 20 dar. Die Last ist beispielsweise eine konstante oder auch sich wiederholt ändernde Wirkleistungslast und erzeugt eine Leistungsaufnahme an dem Anschluß LEDpram.

Zusätzlich kann in diesem Fall auch die angeschlossene LED-Strecke 4 leitend werden womit der LED-Treiber 3 das LED-Modul 2 im Leuchtbetrieb betreibt. Nun kann der Auslese-Konverter 20 beispielsweise einen Entladestrom über diese Last, eine absolute Stromaufnahme der Schaltung 50, eine Frequenz einer Änderung der Leistungsaufnahme des LED-Moduls 2 über den Anschluß LEDparam, oder ein Tastverhältnis oder eine Amplitude einer Leistungsaufnahmeänderung messen. Basierend auf dem Resultat der Messung kann der Auslese-Konverter 20 auf Betriebs- und/oder Wartungsparameter schließen. Beispielweise kann der Auslese-Konverter 20 eine Soll- oder Durchlassspannung oder einen Sollstrom des LED-Moduls bestimmen und diese dem LED-Treiber weiterleiten, so dass dieser diesen Parameter an das LED-Modul 2 anlegen kann. Beispielsweise kann nun automatisch nach Ablauf der vorgegebenen Zeitspanne für die Startphase die Schaltung 50 deaktiviert werden. Die Vorgabe dieser Zeitspanne für die Startphase kann beispielsweise durch eine Zeitladeschaltung festgelegt sein, wobei ein Zeitgeber-Kondensator aufgeladen wird und nach erfolgtem Aufladen des Zeitgeber-Kondensators die Schaltung 50 deaktiviert wird. Die Schaltung 50 nimmt dadurch keine Leistung im dauernden Leuchtbetrieb der LED-Strecke 4 auf und beeinflusst deshalb nicht den Leuchtbetrieb der LED-Strecke 4.

Vorzugsweise ist die Startphase länger als die Rückmeldezeit, damit einerseits ein Auslesen des LED-Moduls durch den Auslese-Konverter 20 ermöglicht ist, andererseits im Dauerbetrieb keine Energie durch die Schaltung 50 verbraucht wird.

Der Auslese-Konverter 20 kann auch so ausgelegt sein, dass er nur zu bestimmten Zeitpunkten, beispielsweise nach jedem Neustart oder Einschalten des LED-Treibers 3 oder auch nach Ablauf einer bestimmten Betriebsstundenzahl für eine bestimmte Zeitspanne aktiviert wird, um die Informationen von dem LED-Modul 2 auszulesen. Nach Ablauf dieser Zeitspanne wird die Speisung des LED-Moduls 3 über den Anschluß LEDpara, wiederdeaktiviert, so dass das LED-Modul 2 nur noch über die Anschlüsse LED+ und LED- versorgt wird und die LED-Strecke 4 entsprechend leuchten kann. Zusätzlich oder alternativ kann wie bereits erwähnt die Schaltung 50 derart ausgelegt sein, dass sie nur während einer Startphase aktiv ist.

Es ist somit eine Schnittstelle zur Übertragung von Energie zu der Sekundärseite des LED-Konverters vorgesehen, um somit Informationen von der Sekundärseite ohne separate Rückführung über die SELV-Barriere auslösen bzw. abrufen zu können.

Eine weitere Ausgestaltung ist es, dass über die gezeigte Schnittstelle, gezielt diskrete Spannungspegel auf der Sekundärseite erzeugt werden können, wobei bei den jeweiligen unterschiedlichen Spannungspegeln unterschiedliche Auslesevorgänge erzeugt werden können. Beispielsweise könnte vorgesehen sein, dass bei einem Spannungspegel von 5 Volt wie festgestellt an dem Pin ADC ein ohmscher Widerstand ausgelesen wird - über die primärseitigen Taktungsparameter - und von einem davon abweichenden DC-Spannungspegel von beispielsweise 7 Volt eine intelligente Schaltung 50 im Sinne eines digitalen Protokolls durch Lastwechselsprünge Information wiedergibt.

Der Auslese-Konverter 20 kann auch derart ausgeführt sein, dass er als Übertrager beispielsweise zumindest einen Optokoppler aufweist, der eine Information von der Seite des LED-Moduls auf die Seite der Steuereinheit 23 überträgt. Beispielsweise kann die Sekundärseite, also die mit dem LED-Modul verbundene Seite, ausgehend von der Spannung LED+ am Ausgang des LED-Treibers 3 gespeist werden. Die Primärseite, also die mit der Steuereinheit 23 verbundene Seite des Auslese-Konverters, kann von der Primärseite des LED-Treibers 3, insbesondere der Primärseite des LED-Konverters 40 aus gespeist werden.

Als Übertrager können auch andere potentialtrennende Bauelemente wie beispielsweise eine Luftspule, ein Hall-Sensor oder ein Kondensator zur Übertragung über die Potentialbarriere genutzt werden.

Der sekundärseitige Teil des Auslese-Konverters 20 kann beispielsweise auch derart auf der Sekundärseite des LED-Treibers 3, insbesondere der Sekundärseite des LED-Konverters 40, angeordnet sein, dass er quasi zwischen den beiden Ausgängen LED+ und LED- des LED-Treibers angeordnet ist. Ein Beispiel ist in der Fig. 7 gezeigt.

Fig. 7 zeigt ein Beispiel für einen erfindungsgemäßen potentialgetrennten bzw. isolierten Auslese-Konverter 20. Der LED-Konverter 40 ist Teil des hier nur ausschnittsweise abgebildeten LED-Treibers 3. Beispielsweise kann dem LED-Konverter 40 ein isolierter Sperrwandler oder ein isolierter Halbbrückenwandler vorgeschaltet sein. Auf der Primärseite des LED-Treibers 3, also beispielsweise auf der Primärseite des isolierten Sperrwandlers oder isolierten Halbbrückenwandlers, ist die Steuereinheit 23 angeordnet.

In der Fig. 7 ist wie bereits erläutert nur ein Ausschnitt des LED-Treibers 3 exakt dargestellt. Von der Primärseite des LED-Treibers 3 sind nur die Steuereinheit 23 und der LED-Konverter 40 nur symbolisch dargestellt. Durch entsprechende Steuerung der Schalter, beispielsweise der beiden Schalter Q1', Q2' im Falle eines isolierten Halbbrückenwandlers, durch die Steuereinheit 23 des LED-Treibers 3 kann wie bereits erläutert ein gewünschter Strom oder auch Spannung für das LED-Modul 2 erzeugt werden. Der in der Fig. 7 gezeigte Tiefsetzsteller ist nur ein optionales Element und nicht unbedingt für die Funktion erforderlich. Beispielsweise kann der Tiefsetzsteller nicht vorhanden sein und der LED-Konverter 40 direkt das LED-Modul 2 speisen. Es ist vor dem Ausgang für das LED-Modul 2 eine Auswerteeinheit 24 vorhanden. Die Steuereinheit 23 ist mit der Primärseite des Übertragers 21 verbunden, somit kann von der Primärseite des LED-Treibers 3 aus ein Auslesen der Informationen aus dem LED-Modul 2 erfolgen.

Auf der Sekundärseite des Auslese-Konverters 20 ist eine Auswerteeinheit 24 angeordnet, mittels derer das an dem Anschluß Vparam anliegende Signal aufbereitet und über den Übertrager 21 übertragen wird. Es kann beispielsweise als eine Art Pegelversatzstufe die Spannung oder der Strom an dem Widerstand Rparam oder das von der intelligenten Schaltung 50 ausgegebene digitale Information gemäß einem vereinbarten Protokoll über den Übertrager 21 übertragen werden.

Es erfolgt als beispielsweise ein galvanisch getrenntes Übertragen 21 eines elektrischen Parameters einer Schaltung 6 durch eine Auswerteeinheit 24 auf der Sekundärseite eines Übertragers 21. Die Schaltung 6 ist dem LED-Modul 2 zugeordnet ist. Vorzugsweise erfolgt ein indirektes Erfassen eines elektrischen Parameters der Schaltung 6 oder dessen zeitlicher Veränderung anhand eines Parameters, der auf der Primärseite des Übertragers 21 erfasst wird, wobei vorzugsweise der elektrische Parameter der Schaltung der Strom durch die Schaltung oder der Wert des Widerstands bzw. der Impedanz der Schaltung ist. Es wird also auf der Primärseite des Übertragers 21 ein elektrischer Parameter erfasst, der durch eine Auswerteeinheit 24 von der Sekundärseite eines Übertragers 21 auf die Primärseite des Übertragers 21 übertragen wird.

In einer alternativen nicht beanspruchten Variante wäre es auch möglich, dass sowohl die Steuereinheit 23, als auch der LED-Konverter 40 zur Versorgung der LED auf der Sekundärseite des LED-Treibers 3 angeordnet sind. In diesem Fall würde eine einfache Ausführung des Auslese-Konverters 20 ohne Potentialtrennung ausreichend sein, um das LED-Modul 2 auszulesen. In diesem Fall kann aber die Steuereinheit 23 mit einer weiteren Steuereinheit auf der Primärseite des LED-Treibers 3 über eine potentialgetrennte Schnittstelle verbunden sein, wobei die Steuereinheit 23 auf der Sekundärseite des LED-Treibers 3 dazu ausgelegt ist, die ausgelesene Information des LED-Moduls 2 an die weitere Steuereinheit auf der Primärseite des LED-Treibers 3 weiterzugeben.

In einer weiteren nicht beanspruchten Alternative kann der Auslese-Konverter 20 ohne Potentialtrennung ausgebildet sein, wobei die Steuereinheit 23 auf der Primärseite des LED-Treibers 3 angeordnet ist und der Auslese-Konverter 20 über eine mit ihm verbundene potentialgetrennte Schnittstelle die ausgelesene Information des LED-Moduls 2 an die Steuereinheit 23 auf der Primärseite des LED-Treibers 3 weitergeben kann.

Es wird auch ein nicht beanspruchtes Verfahren zur Übertragung einer Information über ein LED-Modul offenbart, wobei das LED-Modul an einem dafür vorgesehenen Anschluß in einer vorgegebenen Rückmeldezeit einen definierten Lastwechsel als gepulstes Signal ausgeben kann oder aber eine konstante Last darstellen kann, und der LED-Treiber einen Auslese-Konverter aufweist, der innerhalb dieser Rückmeldezeit den entsprechenden Anschluß des LED-Moduls überwachen kann und erfassen kann, ob ein gepulstes Signal oder eine konstante Last als Informationsquelle vorliegt und auf welche Übertragungsart (gepulstes Signal oder konstante Last) das LED-Modul die Information übertragen kann.

Als Primärseite eines Übertragers wird in dieser Anmeldung die der Netzeingangsseite zugewandte Seite des Übertragers bezeichnet, während als Sekundärseite die der Netzeingangsseite abgewandte Seite des Übertragers, also die dem Ausgang mit dem LED-Modul zugewandte Seite des Übertragers, bezeichnet wird.

Referenzzeichen

| 1 | LED-Beleuchtungssystem |
| 2 | LED-Modul |
| 3 | LED-Treiber |
| 4 | LEDs |
| 5 | Kompensationseinheit |
| 6 | Kodierschaltung (Schaltung) |
| 7 | Versorgungseinheit |
| 8 | Filter- und Gleichrichtereinheit |
| 9 | PFC-Schaltung |
| 20 | Konverter zum Auslesen (Auslese-Konverter) |
| 21 | Übertrager |
| 22 | Erfassungsschaltung |
| 23 | Steuereinheit |
| 40 | LED-Konverter zur Versorgung |
| 50 | Intelligente Schaltung |
| 51 | Sensor |

**Patentansprüche**

1. LED-Treiber (3) aufweisend

   - einen LED-Konverter (40) zur Versorgung eines LED-Moduls (2), wobei das LED-Modul (2) an den LED-Treiber (3) anschließbar ist;
   - einen Auslese-Konverter (20) zum Auslesen von Informationen von dem einen Kodierwiderstand (Rparam) aufweisenden LED-Modul (2), wobei der Auslese-Konverter (20) eine Primärseite und Sekundärseite aufweist,
   - einen Übertrager (21), der ein potentialtrennendes Bauelement ist;
   - eine Steuereinheit (23), die auf der Primärseite des Auslese-Konverters (20) angeordnet ist und mit dem Übertrager (21) verbunden ist;
   - eine Auswerteeinheit (24), die auf der Sekundärseite des Auslese-Konverters (20) angeordnet ist und mit dem Übertrager (21) verbunden ist;
   - zwei Anschlüsse (LED+, LED-) zum Anschließen und zum Versorgen des LED-Moduls (2), die auf der Sekundärseite des Auslese-Konverters (20) angeordnet sind; und
   - einen weiteren Anschluss (LEDparam) zum Verbinden des Kodierwiderstands (Rparam) des anschließbaren LED-Moduls (2) mit der Auswerteeinheit (24), der auf der Sekundärseite des Auslese-Konverters (20) angeordnet ist;
   - wobei der LED-Treiber (3) dazu ausgelegt ist, mittels der Steuereinheit eine definierte Spannung an den Kodierwiderstand (Rparam) zwischen einem der zwei Anschlüsse (LED+, LED-) und dem weiteren Anschluss (LEDparam) anzulegen; und wobei
   - die Auswerteeinheit (24) dazu ausgelegt ist, bei Anliegen der definierten Spannung an dem Kodierwiderstand (Rparam) ein an dem weiteren Anschluss (LEDparam) anliegendes Signal aufzubereiten und das aufbereitete Signal mittels des Übertragers (21) an die Steuereinheit (23) zu übertragen.

2. Verfahren zum Auslesen von Informationen von einem einen Kodierwiderstand (Rparam) aufweisenden LED-Modul (2) mittels eines LED-Treibers (3) gemäß Anspruch 1, wobei das Verfahren folgende Schritte aufweist:

   - Anlegen der definierten Spannung an den anschließbaren Kodierwiderstand (Rparam) zwischen einem der zwei Anschlüsse (LED+, LED-) und dem weiteren Anschluss (LEDparam);
   - bei Anliegen der vordefinierten Spannung an dem Kodierwiderstand (Rparam) aufbereiten des an dem weiteren Anschluss (LEDparam) anliegenden Signals mittels der Auswerteeinheit (24) und übertragen des aufbereiteten Signals mittels des Übertragers (21) von der Auswerteeinheit (24) an die Steuereinheit (23).

3. System aufweisend

   - einen LED-Treiber (3) gemäß Anspruch 1, und
   - das über die zwei Anschlüsse (LED+, LED-) des LED-Treibers (3) versorgbare LED-Modul mit dem Kodierwiderstand (Rparam), wobei der Kodierwiderstand (Rparam) mit dem weiteren Anschluss (LEDparam) und einem der zwei Anschlüsse (LED+, LED-) verbunden ist.

**Claims**

1. LED driver (3) comprising

   - an LED converter (40) for supplying an LED module (2), wherein the LED module (2) can be connected to the LED driver (3);
   - a read-out converter (20) for reading out information from the LED module (2) which has a coding resistor (Rparam), wherein the read-out converter (20) has a primary side and a secondary side;
   - a transformer (21) which is a potential-isolating component;
   - a control unit (23) which is arranged on the primary side of the read-out converter (20) and is connected to the transformer (21);
   - an evaluation unit (24) which is arranged on the secondary side of the read-out converter (20) and is connected to the transformer (21);
   - two terminals (LED+, LED-) for connecting and supplying the LED module (2), which terminals are arranged on the secondary side of the read-out converter (20); and
   - a further terminal (LEDparam) for connecting the coding resistor (Rparam) of the connectable LED module (2) to the evaluation unit (24), which is arranged on the secondary side of the read-out converter (20);
   - wherein the LED driver (3) is designed to apply a defined voltage to the coding resistor (Rparam) between one of the two terminals (LED+, LED-) and the further terminal (LEDparam) by means of the control unit; and
   - the evaluation unit (24) is designed to process a signal applied to the further terminal (LEDparam) when the defined voltage is applied to the coding resistor (Rparam) and to transmit the processed signal to the control unit (23) by means of the transformer (21).

2. Method for reading out information from an LED module (2) having a coding resistor (Rparam) by means of an LED driver (3) according to claim 1, wherein the method comprises the following steps:

   - applying the defined voltage to the connectable coding resistor (Rparam) between one of the two terminals (LED+, LED-) and the further terminal (LEDparam);
   - when the predefined voltage is applied to the coding resistor (Rparam), processing the signal applied to the further terminal (LEDparam) by means of the evaluation unit (24) and transmitting the processed signal from the evaluation unit (24) to the control unit (23) by means of the transformer (21).

3. System comprising

   - an LED driver (3) according to claim 1, and
   - the LED module which has the coding resistor (Rparam) and can be supplied by the two terminals (LED+, LED-) of the LED driver (3), wherein the coding resistor (Rparam) is connected to the further terminal (LEDparam) and one of the two terminals (LED+, LED-).

**Revendications**

1. Pilote pour DEL (3), présentant

   - un convertisseur pour DEL (40) pour l'alimentation d'un module DEL (2), le module DEL (2) pouvant être raccordé au pilote pour DEL (3) ;
   - un convertisseur de lecture (20) pour la lecture d'informations provenant du module DEL (2) présentant une résistance de codage (Rparam), le convertisseur de lecture (20) présentant un côté primaire et un côté secondaire ;
   - un transmetteur (21) qui est un composant à séparation de potentiel ;
   - une unité de commande (23) disposée sur le côté primaire du convertisseur de lecture (20) et connectée au transmetteur (21) ;
   - une unité d'évaluation (24) disposée sur le côté secondaire du convertisseur de lecture (20) et connectée au transmetteur (21) ;
   - deux bornes (LED+, LED-) pour le raccordement et l'alimentation du module DEL (2), lesquelles bornes sont disposées sur le côté secondaire du convertisseur de lecture (20) ; et
   - une borne supplémentaire (LEDparam) pour la connexion, à l'unité d'évaluation (24), de la résistance de codage (Rparam) du module DEL (2) pouvant être raccordé, laquelle borne supplémentaire est disposée sur le côté secondaire du convertisseur de lecture (20) ;
   - le pilote pour DEL (3) étant configuré pour appliquer, à l'aide de l'unité de commande, une tension définie à la résistance de codage (Rparam) entre l'une des deux bornes (LED+, LED-) et la borne supplémentaire (LEDparam) ; et
   - l'unité d'évaluation (24) étant configurée pour traiter un signal appliqué à la borne supplémentaire (LEDparam) lorsque la tension définie est appliquée à la résistance de codage (Rparam) et pour transmettre le signal traité à l'unité de commande (23) à l'aide du transmetteur (21).

2. Procédé permettant la lecture d'informations provenant d'un module DEL (2) présentant une résistance de codage (Rparam) à l'aide d'un pilote pour DEL (3) selon la revendication 1, le procédé présentant les étapes suivantes :

- application de la tension définie à la résistance de codage (Rparam) pouvant être raccordée entre l'une des deux bornes (LED+, LED-) et la borne supplémentaire (LEDparam) ;
- traitement, à l'aide de l'unité d'évaluation (24), du signal appliqué à la borne supplémentaire (LEDparam) lorsque la tension prédéfinie est appliquée à la résistance de codage (Rparam), et transmission, depuis l'unité d'évaluation (24), du signal traité à l'unité de commande (23) à l'aide du transmetteur (21).

3. Système présentant

- un pilote pour DEL (3) selon la revendication 1, et
- le module DEL pouvant être alimenté par l'intermédiaire des deux bornes (LED+, LED-) du pilote pour DEL (3) et comportant la résistance de codage (Rparam), la résistance de codage (Rparam) étant connectée à la borne supplémentaire (LEDparam) et à l'une des deux bornes (LED+, LED-).

Fig. 1

Fig. 2

Iout vs. Rparam

$$Iparam = \frac{5V}{Rset} \times 1000$$

Fig. 3

Fig. 4

14

Fig. 5

Fig. 6

Fig. 7

**EP 3 100 591 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012132048 A1

- US 20120235598 A1